Europäisches Patentamt

(19) European Patent Office

Office européen des brevets

(11) Publication number: 0 116 775
A1

(12) EUROPEAN PATENT APPLICATION

(21) Application number: 83307791.0

(22) Date of filing: 21.12.83

(51) Int. Cl.³: E 21 B 43/25
E 21 B 33/138

(30) Priority: 12.01.83 US 457534

(43) Date of publication of application:
29.08.84 Bulletin 84/35

(84) Designated Contracting States:
DE GB NL

(71) Applicant: MOBIL OIL CORPORATION
150 East 42nd Street
New York New York 10017(US)

(72) Inventor: Jennings, Alfred Roy, Jr.
4021 Leon
Plano Texas 75074(US)

(72) Inventor: Strubhar, Malcolm Krabill
1324 Croydon
Irving Texas 75062(US)

(74) Representative: West, Alan Harry
Mobil Court 3 Clements Inn
London WC2A 2EB(GB)

(54) Treating wells with non-buoyant ball sealers.

(57) In the treatment of the producing zones (12,13) of a well to enhance the flow of produced liquids, ball sealers (16) having a specific gravity greater than the produced fluids are suspended in a viscous fluid having substantially the same specific gravity as the ball sealers. The viscous fluid, with the ball sealers suspended therein, are supplied to at least one of the zones of the well to seat the ball sealers in the perforations in the casing and cement sheath thereby diverting fluid flow from that zone while another zone of the well is being treated.

FIG. 2B

EP 0 116 775 A1

## TREATING WELLS WITH NON-BUOYANT BALL SEALERS

This invention relates to the treatment of subterranean wells
and more particularly to the use of non-buoyant ball sealers to divert
fluid flow from producing zones during the treatment of the well.

In completing oil and gas wells a casing is set in the well
and cement is pumped around the outside of the casing to isolate
various producing formations penetrated by the well.  To establish
fluid communication between the producing formations and the interior
of the casing, the casing and cement are perforated at the producing
zones.  It is common for wells to have production zones that are
distributed over several hundred feet of the well.  Several approaches
are available for treating the separated zones of the well.  If the
zones have not been perforated, the number of perforations can be
limited and a limited entry treatment procedure can be used to treat
all of the zones.  This method requires a rate per perforation ratio
which is sufficient to provide a differential perforation friction
pressure.  If the zones have been perforated without planning for this
limited entry technique, it is difficult, or impractical, to obtain the
required rate per perforation.  If the zones are widely separated, such
as by a distance of more than 1585. meters (5,200 feet), this limited
entry approach is not applicable.

Chemical diverting agents such as benzoic acid flakes or
resinous fluid plugs, can be used to divert fluid flow so that the
treating fluid enters all of the zones.  These chemical diverting
agents have been effectively used, but there is no way of knowing which
zone has been treated, and if complete diversion has been accomplished.

Another method of diverting fluids during the treatment of a
well is by using perforation ball sealers.  In order to seat these
balls efficiently, a minimum flow rate per perforation of approximately
0.0397 to 0.0795 $m^3$/minute (0.25 to 0.5 barrels per minute) per
perforation must be maintained.  These perforation ball sealers provide
a good method of diverting fluids when their use has been planned at
the time the perforations are selected.  The "standard" ball sealers which have been used usually have a density greater than that of the produced fluids so that they drop to the bottom of the well when treatment is completed.

U.S. Patent No. 4,194,561 describes the use of buoyant ball sealers. Placement devices are located in the well at specific locations to position the ball sealers at a particular zone. These devices prevent the upward migration of the buoyant ball sealers past the placement device. The ball sealers are seated on the perforations by flowing fluid down the casing and through the device. These devices are normally used to close the perforations located at the lowermost region of the casing.

U.S. Patent No. 4,287,952 describes the use of the same type of balls in deviated wells. The balls have a specific gravity which is less than, or equal to, the specific gravity of the carrier fluid used to seat them. In this manner, the balls can be seated in perforations which are in the top, along the bottom, or along the sides of the deviated well.

Lightweight, buoyant, balls as suggested for use in these patents have the disadvantage of floating in produced liquids. They must be captured at the surface prior to the chokes, or the like. Also, treatment injection rates must be designed to accommodate the "rate of rise" of the buoyant balls to overcome their buoyancy and carry them to the perforations.

The present invention provides a method of enchancing the flow of produced fluids from a well having a casing which is perforated at a plurality of producing zones comprising:

suspending ball sealers having a specific gravity greater than the produced fluids in a viscous fluid;

supplying the viscous fluid, with the ball sealers suspended therein, to at least one of the zones to seat the ball sealers in the perforations in the zone; and

treating another zone of the well to enhance the flow of the produced fluids.

In accordance with the present invention, ball sealers are seated with a carrier fluid which has sufficient viscosity to suspend non buoyant ball sealers. The ball sealers have a specific gravity which is greater than the produced fluids. The viscous fluid, with the ball sealers suspended therein, is supplied to at least one of the producing zones of the well to seat the ball sealers on the perforations in that zone. Thereafter, other zones of the well are treated by applying an acidizing fluid or the like or by hydraulically fracturing the zones of the well.

In the preferred method of practicing the invention, the viscosity of the treating fluid is increased so that the balls are suspended therein. If the well is undergoing a hydraulic fracturing treatment, gel is added to the treating water. If the well is undergoing an acid treatment, the acid is viscosified, such as by adding sufficient quantities of guar or similar materials. After the balls have been seated on the perforations in the desired zone, the viscosity of the carrier fluid is reduced by chemical means or by diluting it with more treating fluid.

Because the ball sealers are in near perfect transport with respect to the carrier medium, that is the ball sealers neither float nor sink in the carrier fluid, flow through the perforations of a particular zone will seat the suspended balls on the perforations. This technique results in diverting of the fluids regardless of wellbore inclination. This is a particularly marked improvement for inclined wells with the perforations on the underside of the well where the seating of buoyant balls has proved difficult. The present invention also obviates the disadvantage of having buoyant balls floating in the produced fluids where they interfere with production.

Figure 1 shows a well with producing zones to be treated in accordance with the present invention;

Figure 2A shows two of the zones to be treated in accordance with the invention with the upper zone being initially treated; and

Figure 2B is the same as Figure 2A with the upper zone sealed with ball sealers.

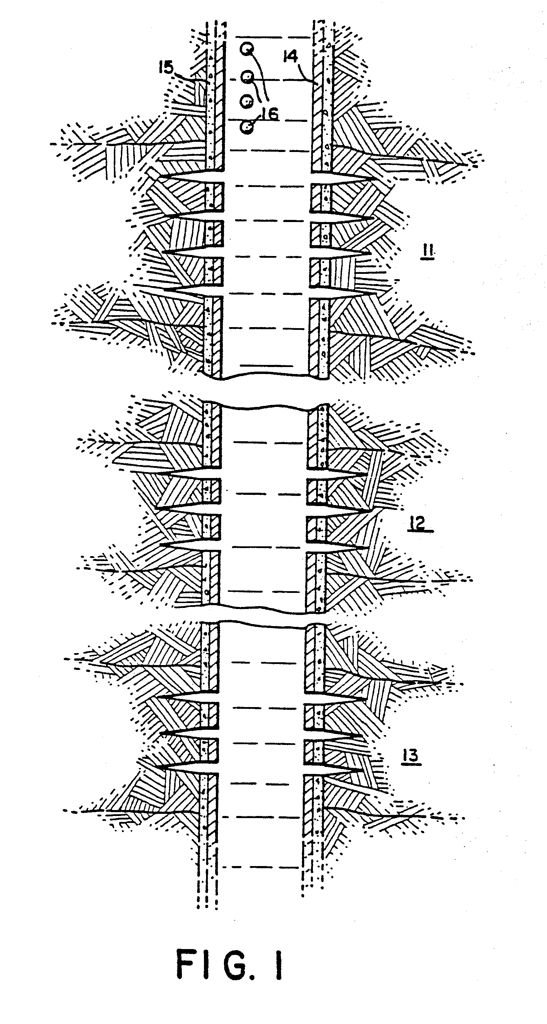

Figure 1 shows a well through subterranean formations which include producing zones 11, 12, and 13. Well casing 14 is held in place by a cement sheath 15. The casing and cement are perforated at the producing zones 11, 12, and 13.

During the life of the well it may become desirable to treat the well to enhance the flow of fluid from the producing zones. Such treatment may include, for example, acidizing, or hydraulic fracturing. In accordance with the present invention, ball sealers having a specific gravity greater than the produced fluids are used. An example of such a ball sealer is commercially available under the name Perfpac Ball (trademark). Ball sealers suitable for use with the present invention have a specific gravity which is greater than 1.0 grams per cubic centimeter.

In accordance with the present invention, the carrier fluid for these ball sealers has sufficient viscosity or gel strength to suspend the ball sealers.

The preferred method of practicing the invention is to increase the viscosity of the treating fluid to suspend the ball sealers. Where water is used as the treating fluid in hydraulic fracturing, gels are added to the water to increase its viscosity. Where an acid treatment is being undertaken, the acid can be viscosified with sufficient quantities of guar, or the like, or the perforation ball sealers can be carried to the perforations in a volume of viscous gelled water followed by additional acid volume.

Examples of viscous fluids which are suitable for use include gelled water or acid which has been viscosified with sufficient quantities of guar, hydroxypropyl guar, carboxymethyl hydroxypropyl guar, hydroxyethyl cellulose, carboxymethyl cellulose, carboxymethyl, hydroxyethyl cellulose, polyacrylamide, or xanthan gum to suspend the perforation ball sealers. The acids which are commonly used for the treatment of wells include hydrochloric, acetic and formic acids, a mixture of hydrochloric and hydrofluoric acids and a mixture of hydrochloric and acetic acids. These treating fluids often contain surfactants and other additives.

The fluid viscosity required to effectively suspend the ball sealers will depend upon the specific gravity of the ball. For example, a fluid with a viscosity of 20-30 cp will effectively suspend a ball with specific gravity of 1.1. A cross-linked fluid with apparent viscosity of 300-500 cp may be required to suspend heavier balls. The heaviest balls presently commercially available are 1.8 g/cc. Therefore, a fluid viscosity greater than 20-30 cp is required to accomplish the seating efficiency desired using the present invention.

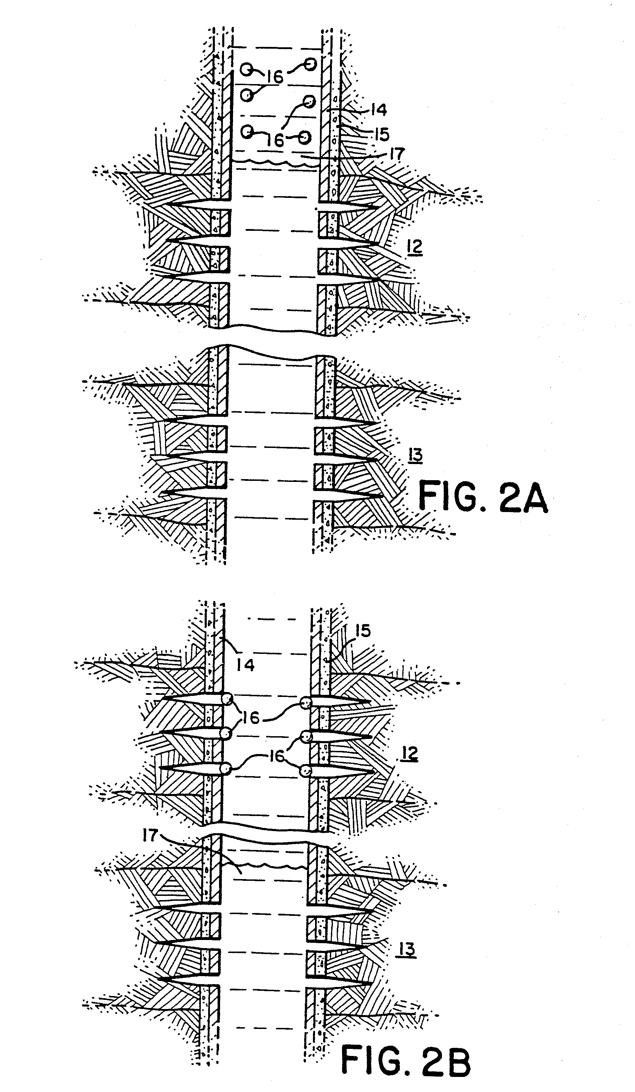

Figure 2A shows ball sealers 16 suspended in a viscous fluid 17 having substantially the same specific gravity as the ball sealers. Figure 2A also shows treating fluid being forced through the perforations in the casing and cement adjacent to zone 12. This is the zone which is treated in the first stage of treatment.

After the first stage of treatment, the viscous fluid, with the ball sealers suspended therein, is supplied to the perforations in the casing and cement adjacent to the zone 12. This seats the ball sealers 16 in the perforations adjacent to the zone 12 as depicted in Figure 2B. The gel viscosity of the carrier fluid is reduced by chemical means and by dilution of the treating fluid pumped after the balls have been seated on the perforations. The remaining viscous fluid 17 is forced through the perforations in the casing and cement adjacent to the zone 13, thereby breaking down this zone as depicted in Figure 2B.

In this manner, fluid flow through the perforations adjacent to a selected zone has been effectively diverted while another zone is treated.

CLAIMS:

1.  The method of enchancing the flow of produced fluids from a well having a casing which is perforated at a plurality of producing zones comprising:

suspending ball sealers having a specific gravity greater than the produced fluids on a viscous fluid;

supplying the viscous fluid, with the ball sealers suspended therein, to at least one of the zones to seat the ball sealers in the perforations in the zone; and

treating another zone of the well to enhance the flow of the produced fluids.

2.  The method of claim 1 wherein the viscous fluid is selected from the group consisting of gelled water, viscosified acids, gelled oil, and viscous oil.

3.  The method of claim 2 wherein the viscosified acids are selected from the group consisting of hydrochloric acid, acetic acid, formic acid, a mixture of hydrochloric and hydrofluoric acids and a mixture of hydrochloric and acetic acids.

4.  The method of claim 3 wherein the viscosified acids are produced through reaction of the acid with material selected from the group consisting of guar, hydroxypropyl guar, carboxymethyl hydroxypropyl guar, hydroxyethyl cellulose, carboxymethyl cellulose, carboxymethyl, hydroxyethyl cellulose, polyacrylamide, and xanthan gum.

5.  The method of any preceding claim wherein treating another zone includes supplying treating fluid to the zone.

6.  The method of any preceding claim wherein treating another zone includes hydraulically fracturing through the casing in the vicinity of the zones.

7. The method of claim 1 wherein the casing is perforated adjacent to upper and lower producing zones, the method further comprising:

supplying treating fluid to the upper zone;

thereafter supplying the viscous fluid, with the ball sealers suspended therein, to the upper zone to seat the ball sealers on the perforations in the upper zone.

8. The method of claim 7 further comprising:

reducing the viscosity of the viscous fluid; and thereafter supplying treating fluid to the lower zone.

9. The method of any preceding claim wherein the ball sealers drop to the bottom of the well after treatment.

10. The method of enhancing the flow of produced fluids from a well having a casing which is perforated at a plurality of producing zones comprising:

increasing the viscosity of treating fluid;

suspending ball sealers in the treating fluid having increased viscosity;

supplying the suspended ball selers to at least one of the zones to seat the ball sealers; and

treating another zone of the well with treating fluid to enhance the flow of the produced fluids.

11. The method recited in claim 10 wherein the treating fluid is water used for hydraulically fracturing the formation and wherein increasing the viscosity of treating fluid is performed by adding gel to the water.

12.  The method recited in claim 10 wherein the treating fluid is an acid and wherein the viscosity of the acid is increased by viscosifying it.

13.  The method recited in claim 12 wherein the acids are selected from the group consisting of hydrochloric acid, acetic acid, formic acid, a mixture of hydrochloric and hydrofluoric acids and a mixture of hydrochloric and acetic acids.

14.  The method recited in claim 12 wherein the acids are viscosified through reaction with materials selected from the group consisting of guar, hydroxypropyl guar, carboxymethyl hydroxypropyl guar, hydroxyethyl cellulose, carboxymethyl cellulose, carboxymethyl, hydroxyethyl cellulose, polyacrylamide, and xanthan gum.

2354H/0145H

0116775

FIG. 1

FIG. 2A

FIG. 2B

## EUROPEAN SEARCH REPORT

European Patent Office

### DOCUMENTS CONSIDERED TO BE RELEVANT

| Category | Citation of document with indication, where appropriate, of relevant passages | Relevant to claim | CLASSIFICATION OF THE APPLICATION (Int Cl. 3) |
|---|---|---|---|
| Y | US-A-2 754 910 (DERRICK)<br><br>* Column 2, lines 54-58; column 1, lines 30-32 * | 1,5,6, 9,10-12 | E 21 B 43/25<br>E 21 B 33/138 |
| Y | US-A-4 231 882 (ELPHINGSTONE)<br><br>* Column 1, lines 25-32; column 2, lines 24-34 * | 1-3,10 -13 | |
| A | GB-A-2 007 744 (ERBSTOESSER)<br><br>* Page 5, lines 11-16; claim 1; page 5, line 111 - page 6, line 17 * | 1-3,5- 7,9-13 | |
| A | US-A-3 086 587 (ZANDMER)<br><br>* Column 4, lines 21-35 * | 1,5,6, 9,10 | **TECHNICAL FIELDS SEARCHED (Int. Cl. 3)**<br><br>E 21 B |
| A | US-A-4 169 797 (JOHNSTON)<br><br>* Column 4, lines 12-14; column 4, line 56 - column 5, line 4 * | 1-4,10 -14 | |
| A,D | US-A-4 287 952 (ERBSTOESSER)<br><br>* Column 1, lines 44-49; column 4, lines 18-30; column 5, lines 18-32 * | 1,6,10 ,11 | |

-/-

The present search report has been drawn up for all claims

| Place of search | Date of completion of the search | Examiner |
|---|---|---|
| THE HAGUE | 24-04-1984 | SOGNO M.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

## DOCUMENTS CONSIDERED TO BE RELEVANT

Page  2

| Category | Citation of document with indication, where appropriate, of relevant passages | Relevant to claim | CLASSIFICATION OF THE APPLICATION (Int. Cl. ³) |
|---|---|---|---|
| A,D | US-A-4 194 561 (STOKLEY)<br><br>* Column 4, line 37 - column 5, line 13; column 1, lines 21-26 * | 1,5,6 10-12 | |

-----

|  |  |  | TECHNICAL FIELDS SEARCHED (Int Cl. ³) |
|---|---|---|---|
|  |  |  |  |

The present search report has been drawn up for all claims

| Place of search | Date of completion of the search | Examiner |
|---|---|---|
| THE HAGUE | 24-04-1984 | SOGNO M.G. |